# NEUE EUROPÄISCHE PATENTSCHRIFT

(11) **EP 2 055 743 B2**
(45) Veröffentlichungstag und Bekanntmachung des Hinweises auf die Entscheidung über den Einspruch: **20.03.2019**
(45) Hinweis auf die Patenterteilung: 03.10.2012
(21) Anmeldenummer: 07119565.5
(22) Anmeldetag: 30.10.2007
(51) Int. Cl.: C08L 77/00, B65G 5/00, E03B 11/00, C08L 77/02

(54) **Formmassen zur Herstellung von Formteilen im Trinkwasserbereich**
Moulding masses for manufacturing moulded parts in the drinking water sector
Masses de formage pour la fabrication de pièces de formage dans le domaine de l'eau potable

(43) Veröffentlichungstag der Anmeldung: 06.05.2009
(73) Patentinhaber: EMS-PATENT AG, 7013 Domat / Ems (CH)
(72) Erfinder: Stöppelmann, Georg, 7402 Bonaduz (CH)
(74) Vertreter: Bremi, Tobias Hans

(56) Entgegenhaltungen:
- EP-A- 1 503 131
- DE-A1- 3 200 428
- DE-A1- 19 945 106
- DE-A1-102005 023 420
- US-A1- 2003 125 481

## Beschreibung

### TECHNISCHES GEBIET

Die vorliegende Erfindung betrifft die Verwendung einer Polyamid-basierten Formmasse im Trinkwasserbereich, das heisst zur Herstellung von Formteilen, bei welchen beim bestimmungsgemässen Gebrauch die verarbeitete Formmasse in Kontakt mit Trinkwasser tritt.

### STAND DER TECHNIK

Trinkwasser als unser wichtigstes Lebensmittel darf bis zur Entnahmestelle des Verbrauchers keine unzulässige Qualitätseinbussen erleiden. Dementsprechend kommt den Werkstoffen in der Trinkwasserinstallation (Bedarfsgegenstände) eine besondere Bedeutung zu. Nach DIN 1988 müssen alle Anlagenteile so beschaffen sein, dass das Trinkwasser in seiner Lebensmittelqualität nicht unzulässig beeinträchtigt wird.

Die Arbeitsgruppe "Trinkwasserbelange" der Kunststoffkommission des Bundesgesundheitsamtes (BGA) befasst sich mit der gesundheitlichen Beurteilung von Bedarfgegenständen aus Kunststoffen und anderen nichtmetallischen Werkstoffen, die im Trinkwasserbereich Verwendung finden sollen. Als Beurteilungsgrundlage dienen die Empfehlungen des BGA für Kunststoffe im Lebensmittelverkehr. Das Ergebnis dieser Arbeit liefert die Grundlage für "Empfehlungen von Kunststoffen und anderen nichtmetallischen Werkstoffen, die im Trinkwasser angewendet werden können (Kunststoff Trinkwasser-Empfehlungen oder kurz KTW-Empfehlungen). Sie entsprechen jeweils dem Stand der Wissenschaft und Technik.

Wenn die Ausgangsstoffe Gegenstand einer KTW-Empfehlung sind und die Fabrikationshilfs- und Zusatzstoffe in Art, Menge und Reinheit den dort aufgeführten Anforderungen entsprechen, ist die Einhaltung der Grund- und Zusatzanforderungen an dem Fertigprodukt (Formteil) nachzuweisen.

Konkret beschreibt die Leitlinie zur hygienischen Beurteilung von organischen Materialien in Kontakt mit Trinkwasser (KTW-Leitlinie, Stand : 16.05.2007) als Konkretisierung des Warmwassertests bei (60 ± 2) °C und des Heisswassertests bei (85 ± 2) °C (Durchführung des Migrationstests entsprechend DIN EN 12873-1: 2004 und - 2: 2005) folgendes Verfahren, welches für die vorliegende Erfindung ein wesentliches Charakterisierungsmerkmal ist:
a) Es erfolgt keine Desinfektionsvorbehandlung (Hochchlorung) der Prüfkörper vor der Prüfung.
b) Die Vorbehandlung erfolgt in der Reihenfolge:
   - 1 h Spülen mit Leitungswasser,
   - 24 h Stagnation mit Versuchswasser bei der Prüftemperatur ((60 ± 2)°C oder (85 ± 2)°C),
   - 1 h Spülen mit Leitungswasser, - Abspülen mit Versuchswasser
c) Als Versuchswasser wird Wasser entsprechend 5.1.2 DIN EN 12873-1 verwendet.
d) Es werden mindestens zwei identische Kontaktversuche und zwei Blindversuche gleichzeitig durchgeführt.
e) Die Prüfung von Rohren mit einem Innendurchmesser < 80 mm erfolgt durch Befüllen. Rohre mit einem Innendurchmesser 80 DN < 300 mm werden durch Einstellen eines Glaszylinders bei einem O/V-Verhältnis (Oberflächen/Volumen-Verhältnis, wobei O die Oberfläche des Prüfkörpers und V das Volumen des Prüfwassers ist) von ca. 5 dm⁻¹ geprüft. Rohre mit einem Innendurchmesser 300 mm können durch Einstellen eines Glaszylinders oder durch Füllen von Rohrsegmenten bei einem O/V-Verhältnis von 5 dm⁻¹ geprüft werden. Behälterbeschichtungen werden als beschichtete Platten bei einem O/V-Verhältnis von ca. 5 dm⁻¹ geprüft. Ausrüstungsgegenstände und Dichtungen werden durch Eintauchen der Produkte bei einem O/V-Verhältnis von ca. 5 dm⁻¹ geprüft.
f) Wenn bei Rohren, Ausrüstungsgegenständen und Dichtungen kein Unterschied in der Materialzusammensetzung und im Produktionsprozess besteht, reicht die Prüfung am geringsten Durchmesser einer Produktreihe.
g) Das Befüllen bzw. Eintauchen der Probekörper erfolgt mit bzw. im Versuchswasser bei der Prüftemperatur. Die Prüfansätze sollen in einem Wärmeschrank oder Thermostaten auf dieser Temperatur gehalten werden.
h) Der Vorbehandlung folgen 7 Migrationsperioden bei der Prüftemperatur (vgl. Anlage 2 der Richtlinie: Schema zur Durchführung der Migrationsprüfungen bei erhöhten Temperaturen). Die Prüfwässer der ersten drei und der letzten zwei Prüfperioden mit je 24 Stunden Kontaktzeit werden für die weiteren Untersuchungen verwendet.
i) Der TOC (Total Organic Carbon) wird als NPOC (Non-Purgeable Organic Carbon) nach DIN EN 1484 in den 5 Migrationsproben bestimmt.
j) Die spezifische Migration von Einzelstoffen wird in den Migrationsproben der 1., 6. und 7. Periode bestimmt.
Eine wichtige Zusatzanforderung ist dabei sogenannte "Kohlenstoff-Abgabe" (Migrationsrate) im Kontakt mit dem Trinkwasser. Der Richtwert bei der 7. Extraktion von 12.5 mg C/m²d darf dabei nicht überschritten werden. Die der Migrationsrate zugrundeliegende Kohlenstoff-Konzentration, die hierbei bestimmt wird, entspricht der Gesamtkonzentration an gelöstem organischem Kohlenstoff (total organic carbon oder kurz TOC) nach dem siebenten Extraktionszyklus.
In der Regel steigt die extrahierbare Stoffmenge und damit der TOC-Wert mit zunehmender Temperatur, so dass bei gleichem polymerem Werkstoff unterschiedliche Extraktwerte bei 23°C (kalten Wasser), 60°C (warmes Wasser) und 85°C (heisses Wasser) erzielt werden. So haben einige Kunststoffe tiefe, KTW-konforme TOC-Werte bei Raumtemperatur, aber hohe TOC-Werte bei 60 oder 85°C, so dass sie nicht für den Warm- und Heisswasserbereich zugelassen werden.
Die US 2005/67514 A1 beschreibt ein Wellrohr, das u.a. auch aus Polyamid bestehen kann, und für die Trinkwasserversorgung verwendet werden soll.
Die DE 19945106 A1 beschreibt einen Druckbehälter, der auch in Trinkwasseranlagen installiert werden kann. Der Behälter wird aus Polyamid im sogenannten Schleudergussverfahren gefertigt. Beispielhaft wird PA6 genannt.
Die US 6511724 beschreibt eine mehrschichtige Kunststoffleitung für die Trinkwasserversorgung, wobei die innere Schicht aus PE und die äussere Schicht aus PA12 besteht. Die PA12-Schicht soll das Eindiffundieren von Kohlenwasserstoffen aus dem Erdreich in das Trinkwasser verhindern. Dass man auf die PE-Innenschicht nicht verzichten kann (oder will) legt nahe, dass PA12 nicht für die Trinkwasserversorgung geeignet ist.
Aus der EP 1788027 sind verstärkte Polyamid Formmassen bekannt, welche aufgebaut sind als Mischungen aus Polyamid 66 und einem Copolyamid auf Basis von Terephthalsäure in Kombination mit Hexamethylendiamin und von Isophthalsäure mit Hexamethylendiamin und wobei erhebliche Anteile an Glasfasern und Carbon- oder Kohlenstofffasern als Füllstoffe enthalten sind. Es werden Verwendungen im Bereich Sanitär offenbart.

### DARSTELLUNG DER ERFINDUNG

Der Erfindung liegt demnach die Aufgabe zugrunde, eine verbesserte Formmasse zur Herstellung eines Formkörper für Trinkwasser zur Verfügung zu stellen, insbesondere eine verbesserte Formmasse, welche auch für Trinkwasser hoher Temperatur zugelassen werden kann.

Die Lösung dieser Aufgabe wird dadurch erreicht, dass eine Formmasse aus den folgenden Bestandteilen:
(A) 30-100 Gew.-% einer Polyamidmischung, enthaltend
(A1) 50-95 Gew.-% PA12;
(A2) 5-50 Gew.-% eines transparenten Homo- oder Co-Polyamids oder einer Mischung derartiger Polyamide gemäss Anspruch 1;
(B) 0-70 Gew.-% Füll- und Verstärkungsstoffe sowie gegebenenfalls Hilfsstoffe und Additive,
zur Herstellung eines Formkörpers für Trinkwasser verwendet wird, insbesondere eines Behälters oder einer Leitung, Gehäuse, Armatur, Ventil etc., bei welchem bei bestimmungsgemässer Verwendung wenigstens Bereiche der verarbeiteten Formmasse im wesentlichen direkt dem Trinkwasser ausgesetzt sind.

Der Kern der Erfindung besteht somit darin, erkannt zu haben, dass die vorgeschlagene spezifische Mischung unerwarteter Weise tatsächlich für hohe Temperaturen einen sehr niedrigen TOC-Wert aufweisen kann.

An sich sind, wenn auch im Zusammenhang mit völlig anderen Anwendungen, Mischungen aus verschiedenen Polyamiden aus dem Stand der Technik selbstverständlich bekannt.

So beschreibt beispielsweise die DE 3200428 C2 eine glasfaserverstärkte Formmasse auf Basis teilkristalliner Polyamide, die 5 - 20 Gew.-% bezogen auf die Gesamtformmasse, wenigstens eines amorphen transparenten Polyamids enthalten. In der Beschreibung und den Beispielen werden lediglich PA6 und PA66 als teilkristalline Polyamide aufgeführt. Die amorphen Polyamide basieren auf TPS und Trimethylhexamethylendiamin oder IPS und HMDA oder Laurinlactam, IPS und MACM. Ziel ist die Verbesserung der Oberflächenqualität von verstärkten Formteilen, und als Verwendung wird nur ganz allgemein ausgeführt, dass im Spritzgussverfahren hergestellte Teile einer optisch gute Oberfläche aufweisen sollen. Einen Hinweis auf die Verwendung im Trinkwasserbereich, gibt es nicht.

Die DE 60209862 T2 beschreibt eine transparente Zusammensetzung enthaltend 5 - 40 Gew.-% eines amorphen Polyamids, 60 - 95 Gew.-% eines teilkristallinen Polyamids und gegebenenfalls Polyamid-Elastomere, Verträglichkeitsvermittler und flexible Modifizierungsmittel. In einer bevorzugten Ausführungsform ist das teilkristalline Polyamid PA12, und das amorphe Polyamid basiert auf dem cycloaliphatischen Diamin Isophorondiamin. Da die beanspruchten Gegenstände transparent sein sollen, werden Glasfasern nicht als mögliche Komponente genannt. Das Dokument betrifft Materialien für Skibeläge, es gibt keine Hinweise auf die Verwendung solcher Formteile im Trinkwasserbereich oder die Realisierung eines tiefen TOC-Wertes.

Die DE 10009756 B4 beschreibt farblose, transparente Blends mit verbesserter Spannungsrissbeständigkeit, die neben den Blendkomponenten mindestens eine Phosphorverbindung enthalten. Die Polymermischung besteht aus 1 - 99 % eines transparenten Polyamids (A) und 99 - 1 % eines teilkristallinen Polyamids (B). In einem bevorzugten Zusammensetzungsbereich werden 10 - 90 % des Polyamids A und 90 - 10 % des Polyamids B gemischt. Übliche Füll- und Verstärkungsstoffe können der Mischung zugesetzt werden. Die Verwendung im Trinkwasserbereich wird nicht genannt. Die in den Beispielen aufgeführten Mischungen enthalten lediglich 30 Gew.-% teilkristallines Polyamid.

Die EP 0523445 beschreibt Blends, welche 25 - 75 Gew.-% teilkristallines Polyamid und 75 - 25 Gew.-% amorphes Polyamid enthalten, welches zwingend dimerisierte Fettsäure als Monomer enthält. Neben optionalen Additiven können auch übliche Füll - und Verstärkungsstoffe in der Formmasse enthalten sein. PA12 als teilkristallines Polyamid wird nicht genannt, ebenso wenig die Verwendung im Trinkwasserbereich.

Die EP0408390 betrifft einen thermoformbaren Film auf Basis teilkristalliner und amorpher Polyamide, wobei die Mischungen 5 - 15 % amorphe Polyamide, bevorzugt des Typs PA 6T/6I enthalten. PA12 wird nicht als teilkristallines Polyamid vorgeschlagen.

Die US 2003/0125481 A1 beschreibt verstärkte Polyamid-Formmassen, erhalten durch Schmelzemischen von teilkristallinen und semi-aromatischen amorphen Polyamiden und anorganischen Verstärkungsstoffen. Die Kristallisationstemperatur der Mischung soll unter 180°C liegen. Die aromatischen Struktureinheiten im amorphen Polyamid rühren von folgenden Monomeren her: IPS, TPS, MXD. Es wird vorgeschlagen, die Formmasse zur Herstellung von Aussenteilen im Automobilbereich, insbesondere für Rückspiegelgehäuse zu verwenden.

Die US 5250604 beschreibt, wie die Kombination von guten mechanischen Eigenschaften und guter Oberflächenqualität von verstärkten Polyamidformmassen, insbesondere bei Aufnahme von Wasser, erreicht wird durch eine polymere Matrix bestehend aus einer Mischung eines aliphatischen, teilkristallinen Polyamids, eines aliphatischen, teilkristallinen Copolyamids sowie eines amorphen Polyamids.

Keines dieser Dokumente beschreibt die Verwendung von solchen Polyamidformmassen in den Bereich von Formteilen im Trinkwasserbereich, und die völlig anders gelagerten Verwendungen in diesen Dokumenten können eine solche Verwendung auch nicht nahe legen. Insbesondere können sie den Fachmann nicht vermuten lassen, dass die vorgeschlagene Formmasse die für solche Anwendungen hervorragend niedrigen TOC Werte zu erreichen in der Lage ist.

Die Formmassen, die dieser Erfindung zugrunde liegen, basieren überwiegend auf aliphatischen, teilkristallinen Polyamiden (A1) und in untergeordneter Menge aus amorphen bzw. mikrokristallinen Polyamiden (A2) und liegen bevorzugt verstärkt vor. Insbesondere setzt sich die Matrix aus PA12 und PA MACM12 bzw. PA MACMI/12 zusammen.

PA12 erfüllt die Zusatzanforderung hinsichtlich des TOC-Wertes für kaltes und warmes, aber nicht für heisses Wasser. Erst durch den Zusatz von amorphen oder mikrokristallinen Polyamiden im Konzentrationsbereich von 15 - 35 Gew.-% kann der TOC so weit abgesenkt werden, dass der geforderte Richtwert erreicht oder unterschritten wird. Die verwendeten amorphen oder mikrokristallinen (gemeinsam ist diesen die Transparenz) Polyamide selbst haben einen tiefen TOC-Wert. Die erzielte TOC Reduktion überschreitet im gewählten Konzentrationsbereich signifikant die sich theoretisch aus dem Mischungsverhältnis der Komponenten ergebenden Werte. Damit ergibt sich überraschend, das Mischungen aus PA12 und transparenten Polyamiden insbesondere im Zusammensetzungsbereich von 62 - 85% (A1) / 38 - 15% (A2) die Anforderungen für den Kontakt auch mit heissem Trinkwasser erfüllen.

Interessanterweise übt der Glasfasergehalt verstärkter Formmassen nur einen geringen Einfluss auf den TOC der einzelnen Extraktionsstufen aus. D.h. es ist nicht möglich durch Zusatz von z.B. 50 Gew.-% Glasfasern (Komponente B) den TOC-Wert zu halbieren. Vielmehr wird beobachtet, dass die unverstärkte und verstärkte Formmasse nahezu identische TOC-Werte oder dass sogar die verstärkten Formmassen die höheren TOC-Werte aufweisen.

Blends aus aliphatischen, teilkristallinen Polyamiden (A1) und transparenten Polyamiden (A2) sind, wie oben diskutiert, bereits weitgehend Stand der Technik. Bislang wurde aber nicht gezeigt oder suggeriert, dass eine Mischung aus den Komponenten A1 und A2 (und gegebenenfalls B) im oben angegebenen Mischungsverhältnis zu Formmassen mit deutlich reduziertem TOC führen. Auch wird die Verwendung solcher Formmassen im Trinkwasserbereich bisher nicht einmal erwähnt. Es existieren auch keine bekannten Trinkwasserzulassungen für solche Blends.

Gemäss einer weiteren bevorzugten Ausführungsform verfügt die Komponente (A1) über eine Lösungsviskosität (0.5 Gew.-% in m-Kresol, 20°C) im Bereich von ηᵣₑₗ = 1.5 bis 3.0, bevorzugt im Bereich von nᵣₑₗ = 1.6 bis 2.6, insbesondere im Bereich von 1.6 bis 2.0.

Bevorzugtermassen ist die Komponente (A1) ein PA12, und dieses bis zu einem 50 Gew.-% Anteil an Glasfasern mit einer Lösungsviskosität (0.5 Gew.-% in m-Kresol, 20°C) von ηᵣₑₗ = 1.8 bis 2.0 vorliegt, für höher verstärkte Formmassen mit einer Lösungsviskosität von ηᵣₑₗ = 1.6 bis 1.8.

Eine weitere bevorzugten Ausführungsform ist dadurch gekennzeichnet, dass das in Komponente (A1) eingesetzte Polyamid entweder ein ausgeglichenes Endgruppenverhältnis aufweist oder die Carboxy-Endgruppen im Überschuss vorliegen, wobei die Konzentration der Aminoendgruppen bevorzugtermassen im Bereich von 5 bis 70 mmol/kg liegt, bevorzugt im Bereich von 5 bis 50 mmol/kg und insbesondere im Bereich von 5 bis 30 mmol/kg und/oder wobei die Konzentration der Carboxy-Endgruppen bevorzugtermassen im Bereich von 50 bis 150 mmol/kg liegt, bevorzugt im Bereich von 60 bis 120 mmol/kg und ganz besonders bevorzugt im Bereich von 60 bis 90 mmol/kg.

Gemäss Erfindung handelt es sich beim transparenten Polyamid um ein Homopolyamid ausgewählt aus der Gruppe MXDI, MXDI/6I, MXD6/MXDI, MACM12, MACM14, MACM16, MACM18, PACM12, PACM14, PACM16, PACM18 und/oder um ein Copolyamid ausgewählt aus der Gruppe MACM12/PACM12, MACM14/PACM14, MACM16/PACM16, MACM18/PACM18, MACM9-18, PACM9-18, MACMI/12, 6I/6T/MACMI/MACMT/12, 3-6T, 6I/6T, TMDT, 6I/MACMI/MACMT, 6I/PACMI/PACMT, MACMI/MACMT/12, 6I/6T/MACMI, MACMI/MACM36, 6I,12/PACMI oder, 12/MACMT, 6I/PACMT, 6/6I, 6/IPDT oder eine Mischung solcher Polyamide. Besonders bevorzugte transparente Polyamide sind MACM12, MACM14, MACM18, PACM12/MACM12, MACMI/12, MACMI/MACMT/12 und 6I/6T.

Das transparente Polyamid, insbesondere in Form eines amorphen oder mikrokristallinen Homopolyamids und/oder Copolyamids, verfügt bevorzugtermassen über eine Lösungsviskosität (ηᵣₑₗ) zwischen 1.3 und 2.0, insbesondere bevorzugt zwischen 1.40 und 1.85, und/oder einen Glasübergangspunkt Tg oberhalb von 90°C, bevorzugt oberhalb von 110°C, insbesondere bevorzugt oberhalb von 130°C.

Weiter ist es bevorzugt, wenn das transparente Polyamid ein mikrokristallines Polyamid und/oder Copolyamid mit einer Schmelzenthalpie im Bereich von 4-40 J/g, insbesondere im Bereich von 4-25 J/g, ist.

Eine ganz besonders bevorzugte Ausführungsform zeichnet sich dadurch aus, dass es sich beim transparenten Polyamid der Komponente (A2) um MACM12-18 und/oder MACMI/12 und/oder MACMI/MACMT/12 handelt.

Nach der Erfindung handelt es sich um einen Formkörper für die Lagerung oder Förderung von Trinkwasser bei erhöhter Temperatur über 60°C, wobei dabei die gesamte Konzentration an gelöstem organischem Kohlenstoff bei der siebten Extraktion einen Wert von 12.5 mg C/m²d bei 85 ± 2 °C (KTW-Leitlinie, Stand 16.5.2007) nicht überschreitet.

Insbesondere zeigte sich, dass ein solcher Formkörper sogar für die Lagerung oder Förderung von Trinkwasser bei Temperaturen über 80°C, bevorzugt bei Temperaturen über 85°C+/-2°C geeignet ist, wobei dabei insbesondere bevorzugt die gesamte Konzentration an gelöstem organischem Kohlenstoff bei der siebten Extraktion einen Wert von 12.5 mg C/m²d nicht überschreitet.

Als weiteres Ergebnis der Entwicklungsarbeiten wurde gefunden, dass die Vernetzung von PA12-Formmassen den TOC ebenfalls deutlich reduzieren kann. Allerdings ist eine Vernetzung von z.B. PA12 allein nicht ausreichend, um den geforderten Richtwert bzgl. des TOC zu erreichen. In Verbindung mit einer strahleninduzierten Vernetzung kann aber die Konzentration des benötigten transparenten Polyamids (Komponente A2) herabgesetzt werden. Des Weiteren wird erwartet, dass die Wärmeformbeständigkeit der Formteile durch die Vernetzung verbessert werden kann. D.h. die Formteile (Rohre, Fittings) sind widerstandfähiger gegen mechanische Einflüsse, wie z.B. einen erhöhten Innendruck. Der Berstdruck eines vernetzten Rohres oder Fittings sollte auf einem höheren Niveau liegen, insbesondere bei hohen Temperaturen (Heisswasser). Die Möglichkeit, der Formmasse ein Vernetzungsadditiv hinzuzufügen und die gefertigten Formteile zu vernetzen, ist somit ebenfalls Gegenstand der Anmeldung.

Eine weitere bevorzugte Ausführungsform besteht entsprechend darin, dass für die erfindungsgemässe Verwendung die Komponente (A) wenigstens teilweise vernetzt ist, bevorzugt durch Hinzufügung eines Vernetzungsadditivs, insbesondere bevorzugt zur strahleninduzierten Vernetzung, wobei es sich bevorzugtermassen dabei um TAIC (Triallylisocyanurat), insbesondere in einem Anteil von im Bereich von 1-5%, handelt. Es kann sich beispielsweise um Systeme handeln, wie sie in der WO 2007/074086 beschrieben sind. Bezüglich der Vernetzung sowie der dazu verwendbaren Additive sei der Offenbarungsgehalt dieses Dokumentes ausdrücklich in den vorliegenden Offenbarungsgehalt mit eingeschlossen. Als Variante kann die Vernetzung, insbesondere die strahleninduzierte Vernetzung (z.B. Elektronenstrahlen), auch ohne Zusatz eines Vernetzungsadditivs erfolgen. Die erfindungsgemäss verwendete Strahlendosis ist grösser als 50 kGy, bevorzugt wird mit einer Dosis zwischen 60 bis 100 kGy gearbeitet. Durch Strahlenvernetzung mit Hilfe des Vernetzungsadditivs TAIC (2 Gew.-% bezogen auf die Polyamid-Matrix) und einer Bestrahlungsdosis von grösser 50 kGy lässt sich der TOC-Wert bereits deutlich reduzieren, obwohl mit TAIC der Polyamid-Formmasse ein niedermolekulares Agens zugesetzt wird.. Die Zugabe des Vernetzungsadditives erfolgt dabei entweder durch Auftrommeln des Vernetzungsadditives auf die Komponente A und/oder B oder der Verwendung eines das Vernetzungsadditiv enthaltenden Masterbatches auf Basis der Komponenten A und/oder B oder durch Zudosieren des reinen oder gelösten Vernetzungsadditives bei der Compoundierung der Komponenten A bis E.

Des Weiteren können die Formmassen mit bis zu 70 Gew.-% Füll- und Verstärkungsstoffen (Komponente (B), z.B. Glas- und/oder Kohlenstofffasern) modifiziert werden. Die Verstärkung kann mit Kurzfasern (z.B. Schnittglas mit einer Länge von 2 - 50 mm) oder Endlosfasern (Langglas oder Rovings) erfolgen.

Die erfindungsgemäss als Roving (Füllstoffkomponente C) eingesetzten Glasfasern weisen einen Durchmesser von 10 bis 20 µm, bevorzugt von 12 bis 17 µm auf. Insbesondere werden erfindungsgemäss E-Glasfasern verwendet. Es können aber auch alle anderen Glasfasersorten, wie z.B. A-, C-, D-, M, S-, R-Glasfasern oder beliebige Mischungen davon oder Mischungen mit E-Glasfasern eingesetzt werden.

Bei langfaserverstärkten Formmassen ergeben sich höhere Zähigkeiten und somit noch metallähnlichere Eigenschaften, wenn anstatt der üblichen Endlosglasfaser mit einem Durchmesser von 15 bis 19 µm, solche mit einem Durchmesser von 10 bis 14 µm, insbesondere solche mit einem Durchmesser von 10 bis 12 µm verwendet werden.

Bevorzugtermassen werden Glasfasern eingesetzt, deren Querschnittsfläche entweder kreisförmig ist oder aber bei welchen das Abmessungsverhältnis von der Haupt-Querschnittsachse zur Neben-Querschnittsachse unterhalb von 2 liegt. In einer bevorzugten Ausführungsform sind die erfindungsgemäss eingesetzten Glasfasern Kurzglasfasern mit einem Durchmesser im Bereich von 7 bis 20, bevorzugt 9 bis 12 µm. Die Glasfasern liegen in Form von Schnittglas mit einer Länge von 2 bis 50 mm vor. Insbesondere werden erfindungsgemäss E- und/oder S-Glasfasern verwendet. Es können aber auch alle anderen Glasfasersorten, wie z. B. A-, C-, D-, M-, R-Glasfasern oder beliebige Mischungen davon oder Mischungen mit E- und/oder S-Glasfasern eingesetzt werden. Es werden die für Polyamid üblichen Schlichten, wie z. B. diverse Aminosilanschlichten, verwendet, wobei hochtemperaturstabile Schlichten bevorzugt werden.

In einer weiteren bevorzugten Ausführungsform sind die eingesetzten Glasfasern Langglasfasern. Die erfindungsgemäss als Roving eingesetzten Glasfasern weisen einen Durchmesser von 10 bis 20 µm, bevorzugt von 12 bis 17 µm auf. Insbesondere werden erfindungsgemäss E-Glasfasern verwendet. Neben den bevorzugten E-Glasfasern, werden insbesondere S-Glasfasern eingesetzt, da sie gegenüber den E-Glasfasern eine um 30% höhere Zugfestigkeit besitzen. Es können aber auch alle anderen Glasfasersorten, wie z.B. A-, C-, D-, M, R-Glasfasern oder beliebige Mischungen davon oder Mischungen mit E- und/oder S-Glasfasern eingesetzt werden.

Die erfindungsgemässen Polyamidformmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschliessend abgekühlt und geschnitten wird. Die beim Pultrusionsverfahren eingesetzten Endlos-Kohlefasern weisen einen

Durchmesser von 5 bis 10 µm, bevorzugt 6 bis 8 µm auf.

Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden, wobei besonders gute Eigenschaften des Formteils mit schonenden Verarbeitungsverfahren erreicht werden. In diesem Zusammenhang bedeutet schonend vor allem, dass ein übermässiger Faserbruch und die damit einhergehende starke Reduktion der Faserlänge weitgehend vermieden wird. Beim Spritzguss bedeutet dies, dass Schnecken mit grossem Durchmesser verwendet werden sollten.

Bevorzugtermassen ist die Komponente (B) wesentlich, bevorzugtermassen im wesentlichen vollständig aus Verstärkungsstoffen gebildet, bevorzugt ausgewählt aus der Gruppe: Glasfasern, Kohlenstofffasern, Borfasern, Aramidfasern, Basaltfasern.

Die Komponente (B) macht gemäss einer weiteren bevorzugten Ausführungsform im Bereich von 10-65 Gewichtsprozent, insbesondere 15-60 Gewichtsprozent, bevorzugt von wenigstens 20 Gewichtsprozent der Polyamidformmasse aus, wobei dieser Anteil bevorzugtermassen zur Hauptsache oder sogar ausschliesslich durch Glasfasern gebildet wird. Neben den Glasfasern können weitere Verstärkungsstoffe in einem Anteil von 0-30 Gewichtsprozent enthalten sein.

Optional können weitere Füll- und Verstärkungsstoffe den Formmassen in Mengen von 0 bis 30 Gew.-% zugesetzt sein. Als bevorzugte weitere Verstärkungsstoffe seien beispielhaft Kohlenstofffasern (Carbonfasern, Graphitfäsern), Borfasern, Aramid- (p-oder m-Aramidfasern (z.B. Kevlar® oder Nomex®, DuPont) oder deren Gemische) und

Basaltfasern genannt, wobei die genannten Verstärkungsfasern als Kurz- oder Langfasern, auch in Form einer Mischung von verschiedenen Fasern eingesetzt werden können. In einer weiteren alternativen erfindungsgemässen Ausführungsform können die erfindungsgemäss eingesetzten Glasfasern im Gemisch mit Kohlenstofffasern (Carbonfasern, Graphitfasern) vorliegen. Durch Austausch eines Teils der Glasfasern durch Kohlenstofffasern entsteht somit ein hybridfaserverstärkter Compound, dessen Steifigkeit im Vergleich zu reinen Glasfasern erhöht ist. Das Gemisch aus Glas- und Kohlenstofffasern kann ein Gewichtsverhältnis von Glasfaser/ Kohlenstofffasern von 70/ 30 bis 97/3, insbesondere von 80/20 bis 95/5 aufweisen.

Untersuchungen haben nun gezeigt, dass verschiedene GF-Typen ganz unterschiedlich zum gemessen TOC-Wert der Formmasse beitragen. Zum anderen weisen unverstärkte Formmassen tendenziell niedrigere TOC-Werte im Vergleich zu den mit Glasfasern verstärkten Formmassen mit ansonsten gleicher Matrix-Zusammensetzung auf. Somit liegt es nahe, den Glasfasern (GF) einen eigenen TOC-Wert (GF-TOC) beizumessen. Der GF-TOC wurde in der Weise bestimmt, dass an Stelle der Polyamidplatte die Glasfasern selbst dem Extraktionszyklus unterworfen wurden. Um einen für den üblichen Test vergleichbaren und aussagekräftigen Wert zu erhalten, wurde eine Glasfasermenge extrahiert, die der Konzentration in der verstärkten Polyamidplatte entspricht (bei 50%iger Verstärkung). Der so bestimmte GF-TOC für die Bayer-GF (Glasfasertyp A) beträgt 45 mg C/d, während für die Vetrotex-GF ein TOC von 90 mg C/d bestimmt wird. Bei der Angabe der Einheiten wurde der Bezug auf die Oberfläche bewusst weggelassen, da die tatsächliche Oberfläche der Glasfasern in diesem Test nicht exakt 1 m² entspricht und andererseits die Normierung auf die Oberfläche aufgrund obiger Überlegungen einen anderen Verstärkungsgrad zugrundelegen würde. Der GF-TOC stellt somit den apparenten Beitrag der Verstärkungsfasern zum Gesamt-TOC im Formteil dar. Aufgrund dieser Erkenntnisse werden erfindungsgemäss bevorzugt Glasfasern mit einem GF-TOC von kleiner als 50 mg C/d eingesetzt.

Die Komponente (B) kann des weiteren Füllstoffe, gegebenenfalls in oberflächenbehandelter Form enthalten, ausgewählt aus der folgenden Gruppe: Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll-oder Hohl-Glaskugeln oder gemahlenes Glas, insbesondere gemahlene Glasfasern, dauerhaft magnetische bzw. magnetisierbare Metallverbindungen und/oder Legierungen, sowie Mischungen der Elemente aus dieser Gruppe. Besonders bevorzugt als Füllstoff werden Mikroglaskugeln mit einem mittleren Durchmesser im Bereich von 5 bis 100 µm, da diese dem Formteil tendenziell isotrope Eigenschaften verleihen und damit die Herstellung von Formteilen mit niedrigen Verzug erlauben.

Als Füll- und Verstärkungsstoff können die erfindungsgemässen thermoplastischen Formmassen vorzugsweise also einen teilchenförmigen Füllstoff oder eine Mischung aus zwei oder mehr unterschiedlichen Füllstoffen auch in Kombination mit Verstärkungsstoffen enthalten.

Da jede organische Stabilisierung eine mögliche C-Quelle hinsichtlich der TOC-Bestimmung gemäss KTW-Richtlinie darstellt, müssen höhere Konzentrationen an Stabilisatoren vermieden werden. Daher wird bevorzugt eine maximale Konzentration der Stabilisierungsadditive von 0.5 Gew.-% bezogen auf die Polyamid-Matrix eingehalten. Um also sicherzustellen, dass keine weiteren unerwünschten C-Quellen in der Polyamidformmasse enthalten sind, erweist es sich als vorteilhaft, wenn der Anteil an Additiven möglichst gering gehalten wird, so beispielsweise indem die Polyamidformmasse höchstens 0.5 Gewichtsprozent an weiteren Additiven, bevorzugt Stabilisierungsadditiven, enthält. Bevorzugte Stabilisatoren sind Phenol- und/oder Phosphit-Verbindungen, wie z.B. Irganox 245, Irganox 1010, Irganox 1098, Hostanox PAR 24 oder Irgafos 168. Besonders bevorzugt wird Irganox 1010 in einer Konzentration von gleich oder kleiner 0.5 Gew.-%.

Bevorzugtermassen liegt die Komponente (A1) im Bereich von 65-85 Gew.-%, insbesondere bevorzugt in Form von PA12 vor, wobei die Komponente (A2) im Bereich von 15-35 Gew.-%, insbesondere bevorzugt in Form von MACM12-18 oder MACMI/12 oder MACMI/MACMT/12, vorliegt, und wobei die Komponente (A) im Bereich von 30 - 90 oder 30 - 85 Gew.-% und wobei als Komponente (C) 10 - 70 respektive 15-70 Gew.-% Füll- und Verstärkungsstoffe, insbesondere bevorzugt in Form von Glasfasern, gegebenenfalls in Kombination mit 0-10 Gew.-% weiteren Hilfsstoffen, vorliegt.

Eine weitere bevorzugte Ausführungsform ist dadurch gekennzeichnet, dass das Verhältnis der Komponente (A1) zur Komponente (A2) in der Polyamidformmasse im Bereich von 1 - 10 bevorzugt im Bereich von 1.5-7, insbesondere bevorzugt im Bereich von 1.6-5.7 liegt. Typischerweise ist unter transparent bei der Bezeichnung der Komponente (A2) zu verstehen, dass die Lichttransmission einer aus der Komponente (A2) hergestellten Platte einer Dicke von 2 mm wenigstens 88%, bevorzugt wenigstens 90%, beträgt, wenn die Transmission mittels UV/VIS-Spektrometer bei einer Wellenlänge von 600 nm bestimmt wird. Die Komponente (A2) ist generell bevorzugtermassen mikrokristallin und/oder amorph.

Des weiteren betrifft die vorliegende Erfindung einen Formkörper zur Förderung und/oder Aufbewahrung von Trinkwasser, insbesondere bei erhöhten Temperaturen bevorzugtermassen im Bereich von oder oberhalb von 80°C, namentlich Annatur, Mischer, Wasserzähler und Wasserzählerkomponenten (Lager, Propeller, Pilone) Ventil und Ventilkomponenten (Gehäuse, Absperrkugel, Schieber, Zylinder), Kartusche, Pumpen und Pumpenkomponenten (z.B. Schaufelräder, Impeller), hergestellt unter Verwendung einer Formmasse wie oben definiert.

Die Formkörper können zur Verbesserung der mechanischen und thermischen Eigenschaften gegebenenfalls nachträglich strahlenvemetzt werden.

Weitere bevorzugte Ausführungsformen der vorliegenden Erfindung sind in den abhängigen Ansprüchen beschrieben.

### WEGE ZUR AUSFÜHRUNG DER ERFINDUNG

In den Beispielen und Vergleichsbeispielen gemäss den Tabellen 1 und 2 wurden nachfolgend genannte Materialien verwendet:

| | |
|---|---|
| PA Typ A: | Polyamid 12 (ηᵣₑₗ = 1,65), EMS-CHEMIE AG, Schweiz |
| PA Typ B: | Polyamid 12 (ηᵣₑₗ = 1,88), EMS-CHEMIE AG, Schweiz |
| PA Typ C: | Polyamid MACMI/12 mit ηᵣₑₗ = 1,55, EMS-CHEMIE AG, Schweiz |
| PA Typ D: | Polyamid MACM12 mit ηᵣₑₗ = 1,74, EMS-CHEMIE AG, Schweiz |
| PA Typ E: | Polyamid MACMI/MACMT/12 mit ηᵣₑₗ = 1,55, EMS-CHEMIE AG, Schweiz |

| | |
|---|---|
| Irganox 1010: | Pentaerythritoltetrakis-[3-(3,5-di-tert-butyl-4-hydroxyphenyl)-Antioxidans auf Basis eines sterisch gehinderten Phenols |
| Glasfasern | Typ A: CS 7928, 4.5 mm lang, 10 µm Durchmesser, BAYER AG, Deutschland |

Die Formmassen der Zusammensetzungen in Tabelle 1 und 2 werden auf einen Zweiwellenextruder der Fa. Werner u. Pfleiderer Typ ZSK 30 hergestellt. Die Granulate des Typs A bis E werden in die Einzugszone dosiert. Die Glasfaser wird über einen Sidefeeder 3 Gehäuseeinheiten vor der Düse in die Polymerschmelze dosiert.

Die Gehäusetemperatur wurde als aufsteigendes Profil bis 280°C eingestellt. Bei 150 bis 200 upm wurden 10 kg Durchsatz erreicht. Die Granulierung erfolgte mittels einer Unterwassergranulierung bzw. Heissabschlags unter Wasser, bei der die Polymerschmelze durch eine Lochdüse gedrückt und direkt nach dem Austritt aus der Düse von einem rotierenden Messer in einem Wasserstrom granuliert wird. Nach Granulierung und Trocknung bei 100°C für 24h wurden die Granulateigenschaften gemessen und die Prüfkörper hergestellt.

Die Prüfkörper wurden auf einer Arburg Spritzgussmaschine hergestellt, wobei die Zylindertemperaturen von 220°C bis 280°C und eine Scheckenumfangsgeschwindigkeit von 15 m/min eingestellt wurden. Die Formtemperatur wurde mit 40 - 90°C gewählt.

Die Messungen wurden nach folgenden Normen und an folgenden Prüfkörpern durchgeführt. Zug-E-Modul: ISO 527 mit einer Zuggeschwindigkeit von 1 mm/min, ISO-Zugstab , Norm: ISO/CD 3167, Typ A1, 170 x 20/10 x 4 mm, Temperatur 23 °C

Reissfestigkeit und Reissdehnung: ISO 527 mit einer Zuggeschwindigkeit von 5 mm/min für verstärkte Formmassen und mit einer Zuggeschwindigkeit von 50 mm/min für unverstärkte Formmassen. ISO-Zugstab , Norm: ISO/CD 3167, Typ A1, 170 x 20/10 x 4 mm, Temperatur 23 °C

Schlagzähigkeit nach Charpy: ISO 179/*eU, ISO-Prüfstab, Norm: ISO/CD 3167, Typ B1, 80 x 10 x 4 mm, Temperatur 23 °C, * 1 = nicht instrumentiert, 2 = instrumentiert

Kerbschlagzähigkeit nach Charpy: ISO 179/*eA, ISO-Prüfstab, Norm: ISO/CD 3167, Typ B1, 80 x 10 x 4 mm, Temperatur 23 °C, * 1 = nicht instrumentiert, 2 = instrumentiert

Glasumwandlungstemperatur (Tg), Schmelzenthalpie (ΔH): ISO-Norm 11357-1/-2, Granulat.

Die Differential Scanning Calorimetry (DSC) wurde mit Aufheizrate von 20 °C/min durchgeführt.

Relative Viskosität: DIN EN ISO 307, in 0,5 Gew.-%-iger m-Kresollösung, Temperatur 20 °C

MVR: (Melt volume rate): nach ISO 1133 bei 275°C und unter einer Belastung von 5 kg

Berstdruck: Ein zylindrischer, einseitig verschlossener Spritzgusskörper (Innendurchmesser 27,2 mm; Wandstärke: 4 mm) wird mit Wasser gefüllt, mittels einer Hydraulikschnellkupplung in einem Berstdruckprüfstand montiert und mit 10 bar/s Druckanstieg einem Berstdruckversuch (Kurzzeit-Innendruckbelastung bis zum Versagen) unterzogen. In den Tabellen wird der maximal erreichte Druck angegeben. Die Probekörper, die einer Wasserlagerung unterzogen wurden, wurden unmittelbar nach Beendigung der Lagerung dem Berstdruckversuch unterworfen.

Messung TOC-Wert 7. Migration: Nach Leitlinie zur hygienischen Beurteilung von organischen Materialien in Kontakt mit Trinkwasser (KTW-Leitlinie, Stand : 16.05.2007) Heisswassertest bei (85 ± 2) °C (Durchführung des Migrationstests entsprechend DIN EN 12873-1: 2004 und -2: 2005); es wurden je zwei identische Kontakt- und Blindversuche parallel ausgeführt; die Differenz der Mittelwerte von Mess- und Blindwert ergibt die gesuchte Kohlenstoffkonzentration; als Prüfkörper wurden Platten mit einer Oberfläche von 87.5 cm² eingesetzt, die bei einem O/V-Verhältnis von 2.5 dm⁻¹ je mit 350 ml Prüfwasser pro Migrationstest extrahiert wurden; der TOC wurde nach der NPOC-Methode mit dem Gerät TOC-V CPH von Shimadzu bestimmt. Zeitstand-Innendruckverhalten: Wurde gemäss ISO 9080 an Rohren mit einem Durchmesser von 32 mm und einer Wandstärke von 3 mm bei einer Temperatur von 60°C bestimmt, wobei die Rohre innen und aussen in Kontakt mit Wasser standen. Die ermittelten Werte bilden die Basis für die Extrapolation des Zeitstandverhaltens auf 50 Jahre. In der Tabelle werden die auf 50 Jahre extrapolierten Prüfspannungen angegeben.

Wenn in der Tabelle oder Beschreibung nicht anders vermerkt, werden die Prüfkörper im trockenen Zustand verwendet. Dazu werden die Prüfkörper nach dem Spritzguss mindestens 48 h bei Raumtemperatur in trockener Umgebung gelagert.

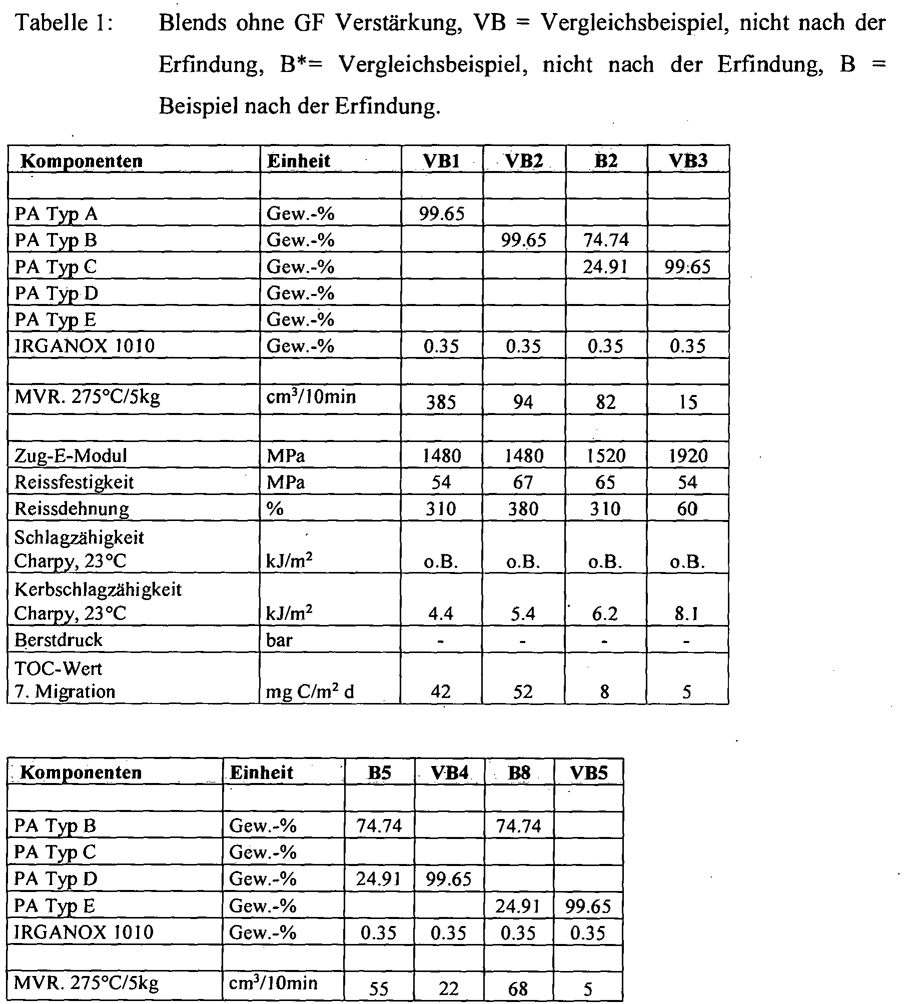

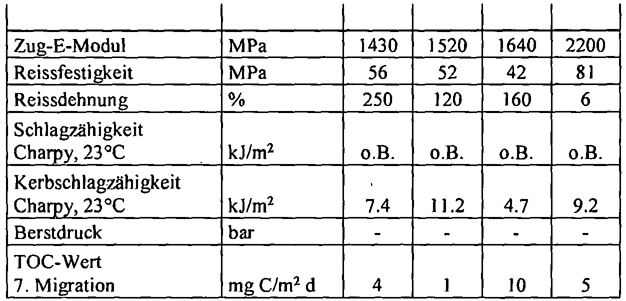

**Tabelle 2: Blends mit GF Verstärkung, VB = Vergleichsbeispiel, nicht nach der Erfindung, B = Beispiel nach der Erfindung.**

| **Komponenten** | **Einheit** | **B10** | **B11** | **B12** | **B13** | **B14** | **B15** |
|---|---|---|---|---|---|---|---|
| | | | | | | | |
| PA Typ B | Gew.-% | 39.80 | 37.32 | 34.82 | 37.32 | 37.32 | 34.82 |
| PA Typ C | Gew.-% | | | | 12.43 | | |
| PA Typ D | Gew.-% | 9.95 | 12.43 | 14.93 | | | |
| PA Typ E | Gew.-% | | | | | 12.43 | 14.93 |
| IRGANOX 1010 | Gew.-% | 0.25 | 0.25 | 0.25 | 0.25 | 0.25 | 0.25 |
| Glasfasern Typ A | Gew.-% | 50.00 | 50.00 | 50.00 | 50.00 | 50.00 | 50.00 |
| | | | | | | | |
| MVR. 275°C/5kg | cm³/10min | | | | | | |
| | | | | | | | |
| Zug-E-Modul | MPa | 11860 | 11860 | 11890 | 12140 | 12240 | 12140 |
| Reissfestigkeit | MPa | 154 | 152 | 152 | 156 | 168 | 168 |
| Reissdehnung | % | 4.5 | 4.3 | 4.1 | 4.9 | 5.2 | 5 |
| Schlagzähigkeit Charpy, 23°C | kJ/m² | 92 | 92 | 83 | 98 | 89 | 82 |
| Kerbschlagzähigkeit Charpy, 23°C | kJ/m² | 25 | 25 | 26 | 25 | 17 | 18 |
| Berstdruck | bar | 275 | 280 | 290 | 280 | 290 | 300 |
| Berstdruck nach Lagerung 2000h, 23°C | bar | - | - | - | 250 | - | 260 |
| Berstdruck nach Lagerung 2000h, 80°C | bar | - | - | - | 235 | - | 240 |
| Berstdruck nach Lagerung 2000h, 95°C | bar | - | - | - | 230 | - | 240 |
| TOC-Wert 7. Migration | mg C/m²d | 12 | 9 | 6 | 9 | 9 | 6 |

Wie die Beispiele B13 und B15 zeigen, bleiben die Berstdrücke auch nach Lagerung in Heisswasser (Wasser von 80 bzw. 95°C) auf hohem Niveau.

**Tabelle 3: Vernetzte Formteile (Zug- und Schlagstäbe, Zylinder für Berstdruckprüfung sowie Platten) auf Basis von Blends mit GF Verstärkung, VB = Vergleichsbeispiel, nicht nach der Erfindung, B = Beispiel nach der Erfindung.**

| | **Einheit** | **VB6** | **VB7** | **B17** | **B18** | **B19** |
|---|---|---|---|---|---|---|
| PA Typ B | Gew.-% | 49.75 | 48.75 | 38.80 | 67.80 | 66.40 |
| PA Typ D | Gew.-% | 0 | 0 | 9.95 | 16.95 | 16.65 |
| TAIC | Gew.-% | 0 | 1.00 | 1.00 | 0 | 1.7 |
| IRGANOX 1010 | Gew.-% | 0.25 | 0.25 | 0.25 | 0.25 | 0.25 |
| Glasfasern Typ A | Gew.-% | 50.00 | 50.00 | 50.00 | 15.00 | 15.00 |
| | | | | | | |
| Zug-E-Modul | MPa | 11800 | 11950 | 12000 | 3150 | 3050 |
| Reissfestigkeit | MPa | 149 | 155 | 158 | 75 | 95 |
| Reissdehnung | % | 5.2 | 3.4 | 3.3 | 12 | 8 |
| Berstdruck | bar | 260 | 270 | 285 | - | - |
| TOC-Wert 7. Migration | mg C/m² d | 45 | 18 | 6 | 12 | 7 |
| Zeitstand-Innendruckverhalten Prüfspannung | N/mm² | - | - | - | 5.3 | 14.2 |

Die Formkörper, hergestellt aus den Formmassen des Vergleichsbeispiels VB7 sowie der Beispiele B17 und B19, wurden durch Bestrahlung mit Elektronen (Dosis: 66 kGy) vernetzt.

Die Migrationsrate (TOC) lässt sich durch Vernetzen deutlich reduzieren. Jedoch genügt eine Vernetzung der PA12-Matrix allein nicht, um die geforderte tiefe Migrationsrate zu erreichen. Dies belegen die Vergleichsbeispiele VB6 und VB7. Erst die Kombination von Vernetzung und Zusatz von transparentem Polyamid löst die gestellte Aufgabe hinsichtlich des TOC-Wertes. Allerdings werden tiefe Migrationswerte bei den vernetzten Formkörpern bereits mit niedrigerer Konzentration an transparentem Polyamid erzielt. Dies zeigt ein Vergleich des Beispiels B10. Bei gleichem Anteil an transparentem Polyamid (PA Typ D) weist die unvernetzte Formmasse (B10) einen TOC-Wert bei der 7. Migration von 12 mg C/m² d auf, während bei der vernetzten Formmasse (B17) die Migrationsrate lediglich 6 mg C/m² d beträgt, d.h. die Migrationsrate wurde durch Vernetzung halbiert.

Ein Vergleich der Beispiele B18 und B19 zeigt, dass durch Vernetzen der erfindungsgemässen Formkörper das Zeitstandverhalten unter Innendruckbelastung deutlich verbessert werden konnte; die Prüfspannung konnte mehr als verdoppelt werden.

## Patentansprüche

1. Verwendung einer Formmasse aus den folgenden Bestandteilen:
(A) 30-100 Gew.-% einer Polyamidmischung, enthaltend
(A1) 50-95 Gew.-% PA12;
(A2) 5-50 Gew.-% eines transparenten Homo- oder Co-Polyamids oder einer Mischung derartiger Polyamide, wobei es sich beim transparenten Polyamid der Komponente (A2) um ein Homopolyamid ausgewählt aus der Gruppe MXDI, MXDI/6I, MXD6/MXDI, MACM12, MACM14, MACM16, MACM18, PACM12, PACM14, PACM16, PACM18 und/oder um ein Copolyamid ausgewählt aus der Gruppe MACM12/PACM12, MACM14/PACM14, MACM16/PACM16, MACM18/PACM18, MACM9-18, PACM9-18, MACMI/12, 6I/6T/MACMI/MACMT/12, 3-6T, 6I/6T, TMDT, 6I/MACMI/MACMT, 6I/PACMI/PACMT, MACMI/MACMT/12, 6I/6T/MACMI, MACMI/MACM36, 6I, 12/PACMI, 12/MACMT, 6I/PACMT, 6/6I, 6/IPDT oder eine Mischung solcher Polyamide, handelt;
wobei das Verhältnis der Komponente (A1) zur Komponente (A2) in der Formmasse im Bereich von 2 - 5 liegt,
(B) 0-70 Gew.-% Füll- und Verstärkungsstoffe sowie gegebenenfalls Hilfsstoffe und Additive,
zur Herstellung eines Formkörpers für Trinkwasser, insbesondere eines Behälters oder einer Leitung, bei welchem bei bestimmungsgemässer Verwendung wenigstens Bereiche der verarbeiteten Formmasse im wesentlichen direkt dem Trinkwasser ausgesetzt sind, wobei es sich um einen Formkörper für die Lagerung oder Förderung von Trinkwasser bei erhöhter Temperatur über 60°C handelt, wobei dabei die gesamte Konzentration an gelöstem organischem Kohlenstoff bei der siebten Extraktion einen Wert von 12.5 mg C/m²d bei 85 ± 2 °C (KTW-Leitlinie, Stand 16.5.2007) nicht überschreitet.

2. Verwendung nach Anspruch 1, **dadurch gekennzeichnet, dass** die Komponente (A1) wenigstens ein Polyamid mit einem Methylen/Amid-Verhältnis von 5 - 12, bevorzugt von 7 - 12 aufweist.

3. Verwendung nach einem der vorhergehenden Ansprüche, **dadurch gekennzeichnet, dass** das transparente Polyamid der Komponente (A2), insbesondere in Form eines amorphen oder mikrokristallinen Homopolyamids und/oder Copolyamids, eine Lösungsviskosität (ηᵣₑₗ) zwischen 1.3 und 2.0, insbesondere bevorzugt zwischen 1.40 und 1.85, aufweist und/oder einen Glasübergangspunkt Tg oberhalb von 90°C, bevorzugt oberhalb von 110°C, insbesondere bevorzugt oberhalb von 130°C.

4. Verwendung nach einem der vorhergehenden Ansprüche, **dadurch gekennzeichnet, dass** das transparente Polyamid ein mikrokristallines Polyamid und/oder Copolyamid mit einer Schmelzenthalpie im Bereich von 4-40 J/g, insbesondere im Bereich von 4-25 J/g, ist.

5. Verwendung nach einem der vorhergehenden Ansprüche, **dadurch gekennzeichnet, dass** es sich beim transparenten Polyamid der Komponente (A2) um MACM12-18, bevorzugt um MACM12, MACM14, und/oder MACM18, und/oder um MACMI/12 und/oder um PACM12/MACM12 und/oder um MACMI/MACMT/12 und/oder um 6I/6T handelt.

6. Verwendung nach einem der vorhergehenden Ansprüche, **dadurch gekennzeichnet, dass** es sich um einen Formkörper für die Lagerung oder Förderung von Trinkwasser bei Temperaturen über 80°C, bevorzugt bei Temperaturen über 85°C±2°C handelt, wobei dabei insbesondere bevorzugt die gesamte Konzentration an gelöstem organischem Kohlenstoff bei der siebten Extraktion einen Wert von 12.5 mg C/m²d nicht überschreitet.

7. Verwendung nach einem der vorhergehenden Ansprüche, **dadurch gekennzeichnet, dass** die Komponente (A) wenigstens teilweise vernetzt ist, bevorzugt mit oder ohne Hinzufügung eines Vernetzungsadditivs, insbesondere unter strahleninduzierter Vernetzung, wobei es sich bevorzugtermassen beim Vernetzungsadditiv um TAIC, insbesondere in einem Anteil von im Bereich von 1-5%, handelt.

8. Verwendung nach einem der vorhergehenden Ansprüche, **dadurch gekennzeichnet, dass** die Komponente (B) zur Hauptsache, bevorzugtermassen im wesentlichen vollständig aus Verstärkungsstoffen, bevorzugt ausgewählt aus der Gruppe: Glasfasern, Kohlenstofffasern, Borfasern, Aramidfasern, Basaltfasern, gebildet wird.

9. Verwendung nach einem der vorhergehenden Ansprüche, **dadurch gekennzeichnet, dass** die Komponente (B) im Bereich von 10-65 Gewichtsprozent, insbesondere 15-60 Gewichtsprozent, bevorzugt von wenigstens 20 Gewichtsprozent der Polyamidformmasse ausmacht, wobei dieser Anteil bevorzugtermassen ausschliesslich durch Glasfasern gebildet wird.

10. Verwendung nach Anspruch 9, **dadurch gekennzeichnet, dass** neben den Glasfasern weitere Verstärkungsstoffe in einem Anteil von 0-30 Gewichtsprozent enthalten sind.

11. Verwendung nach einem der vorhergehenden Ansprüche, **dadurch gekennzeichnet, dass** die Komponente (B) des weiteren Füllstoffe, gegebenenfalls in oberflächenbehandelter Form, ausgewählt aus der folgenden Gruppe: Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll- oder Hohl-Glaskugeln oder gemahlenes Glas, insbesondere gemahlene, flache Glasfasern, dauerhaft magnetische bzw. magnetisierbare Metallverbindungen und/oder Legierungen, sowie Mischungen der Elemente aus dieser Gruppe, enthält.

12. Verwendung nach einem der vorhergehenden Ansprüche, **dadurch gekennzeichnet, dass** die Komponente (A1) ein PA12 ist mit einer Lösungsviskosität im Bereich von ηᵣₑₗ = 1.5 bis 3.0, bevorzugt im Bereich von ηᵣₑₗ = 1.6 bis 2.6, insbesondere im Bereich von 1.6 bis 2.0, jeweils in gemessen 0,5 Gew.-%-iger m-Kresollösung bei einer Temperatur von 20 °C.

13. Verwendung nach einem der vorhergehenden Ansprüche, **dadurch gekennzeichnet, dass** die Komponente (A1) ein PA12 ist, und bis zu einem 50 Gew.-% Anteil an Glasfasern mit einer Lösungsviskosität von ηᵣₑₗ = 1.8 bis 2.0 vorliegt, für höher verstärkte Formmassen mit einer Lösungsviskosität von ηᵣₑₗ = 1.6 bis 1.8, jeweils in gemessen 0,5 Gew.-%-iger m-Kresollösung bei einer Temperatur von 20 °C.

14. Verwendung nach einem der vorhergehenden Ansprüche, **dadurch gekennzeichnet, dass** die in Komponente (A1) eingesetzten Polyamide entweder ein ausgeglichenes Endgruppenverhältnis aufweisen oder die Carboxy-Endgruppen im Überschuss vorliegen, wobei die Konzentration der Aminoendgruppen bevorzugtermassen im Bereich von 5 bis 70 mmol/kg liegt, bevorzugt im Bereich von 5 bis 50 mmol/kg und insbesondere im Bereich von 5 bis 30 mmol/kg und/oder wobei die Konzentration der Carboxy-Endgruppen bevorzugtermassen im Bereich von 50 bis 150 mmol/kg liegt, bevorzugt im Bereich von 60 bis 120 mmol/kg und ganz besonders bevorzugt im Bereich von 60 bis 90 mmol/kg.

15. Verwendung nach einem der vorhergehenden Ansprüche, **dadurch gekennzeichnet, dass** die Polyamidformmasse höchstens 0.5 Gewichtsprozent an weiteren Additiven, bevorzugt Stabilisierungsadditiven enthält.

16. Verwendung nach einem der vorhergehenden Ansprüche, **dadurch gekennzeichnet, dass** die Komponente (A) im Bereich von 30 bis 90 Gew.-% vorliegt, dass die Komponente (A1) im Bereich von 65-85 Gew.-% vorliegt, dass die Komponente (A2) im Bereich von 15-35 Gew.-%, insbesondere bevorzugt in Form von MACM12-18 oder MACMI/12 oder MACMI/MACMT/12, vorliegt, und dass als Komponente (B) 10-70 Gew.-% Füll- und Verstärkungsstoffe, insbesondere bevorzugt in Form von Glasfasern, gegebenenfalls in Kombination mit 0-10 Gew.-% weiteren Hilfsstoffen, vorliegt.

17. Verwendung nach einem der vorhergehenden Ansprüche, **dadurch gekennzeichnet, dass** das Verhältnis der Komponente (A1) zur Komponente (A2) in der im Bereich von 2.5 - 4 liegt.

18. Verwendung nach einem der vorhergehenden Ansprüche, **dadurch gekennzeichnet, dass** die Lichttransmission, bestimmt bei einer Wellenlänge von 600 nm, einer aus der Komponente (A2) hergestellten Platte einer Dicke von 2 mm wenigstens 88%, bevorzugt wenigstens 90%, beträgt.

19. Verwendung nach einem der vorhergehenden Ansprüche, **dadurch gekennzeichnet, dass** die Komponente (A2) mikrokristallin und/oder amorph ist.

20. Formkörper zur Förderung und/oder Aufbewahrung von Trinkwasser, bei erhöhten Temperaturen im Bereich oberhalb von 60°C, in Form
einer Armatur oder Gehäuses,
eines Ventils oder einer Ventilkomponente ausgewählt aus der Gruppe Ventilgehäuse, Ventilabsperrkugel, Ventilschieber, Ventilzylinder;
eines Mischers;
eines Wasserzählers oder einer Wasserzählerkomponente ausgewählt aus der Gruppe Lager, Propeller, Pilone;
einer Pumpe oder einer Pumpenkomponente ausgewählt aus der Gruppe Schaufelrad, Impeller; oder
einer Kartusche, Leitung oder Behälters respektive Bestandteil oder Element davon, hergestellt unter Verwendung einer Formmasse wie definiert in einem der Ansprüche 1-19.

## Claims

1. The use of a molding material composed of the following constituents:
(A) 30-100% by weight of a polyamide mixture comprising
(A1) 50-95% by weight of PA12;
(A2) 5-50% by weight of a transparent homo- or copolyamide selected from the group of MXDI, MXDI/6I, MXD6/MXDI, MACM12, MACM14, MACM16, MACM18, PACM12, PACM14, PACM16, PACM18 and/or is a copolyamide selected from the group of MACM12/PACM12, MACM14/PACM14, MACM16/PACM16, MACM18/PACM18, MACM9-18, PACM9-18, MACMI/12, 6I/6T/MACMI/MACMT/12, 3-6T, 6I/6T, TMDT, 6I/MACMI/MACMT, 6I/PACMI/PACMT, MACMI/MACMT/12, 6I/6T/MACMI, MACMI/MACM36, 61, 12/PACMI, 12/MACMT, 6I/PACMT, 6/61, 6/IPDT or of a mixture of such polyamides;
wherein the ratio of component (A1) to component (A2) in the polyamide molding material is in the range of 2-5,
(B) 0-70% by weight of fillers and reinforcers, and optionally assistants and additives,
for producing a molding for drinking water, especially a vessel or a conduit in which, in the course of use as intended, at least regions of the processed molding material are exposed essentially directly to the drinking water, wherein the molding is one for the storage or delivery of drinking water at elevated temperature above 60°C, in which case the total concentration of dissolved organic carbon in the seventh extraction preferably does not exceed a value of 12.5 mg C/m²d.

2. The use as claimed in claim 1, **characterized in that** component (A1) comprises at least one polyamide with a methylene/amide ratio of 5-12, preferably of 7-12.

3. The use as claimed in any of the preceding claims, **characterized in that** the transparent polyamide of component (A2), especially in the form of an amorphous or microcrystalline homopolyamide and/or copolyamide, has a solution viscosity (ηᵣₑₗ) between 1.3 and 2.0, especially preferably between 1.40 and 1.85, and/or a glass transition temperature Tg above 90°C, preferably above 110°C, especially preferably above 130°C.

4. The use as claimed in any of the preceding claims, **characterized in that** the transparent polyamide is a microcrystalline polyamide and/or copolyamide with an enthalpy of fusion in the range of 4-40 J/g, especially in the range of 4-25 J/g.

5. The use as claimed in any of the preceding claims, **characterized in that** the transparent polyamide of component (A2) is MACM12-18, preferably MACM12, MACM14 and/or MACM18, and/or MACMI/12 and/or PACM12/MACM12 and/or MACMI/MACMT/12 and/or 6I/6T.

6. The use as claimed in any of the preceding claims, **characterized in that** the molding is one for the storage or delivery of drinking water at temperatures above 80°C, preferably at temperatures above 85°C±2°C, in which case the total concentration of dissolved organic carbon in the seventh extraction especially preferably does not exceed a value of 12.5 mg C/m²d.

7. The use as claimed in any of the preceding claims, **characterized in that** component (A) is at least partly crosslinked, preferably with or without addition of a crosslinking additive, especially with radiation-induced crosslinking, wherein the crosslinking additive is preferably TAIC, especially in a proportion of in the range of 1-5%.

8. The use as claimed in any of the preceding claims, **characterized in that** component (B) is formed in the main, preferably essentially completely, from reinforcers, preferably selected from the group of: glass fibers, carbon fibers, boron fibers, aramid fibers, basalt fibers.

9. The use as claimed in any of the preceding claims, **characterized in that** component (B) makes up in the range of 10-65% by weight, especially 15-60% by weight, preferably at least 20% by weight, of the polyamide molding material, wherein this proportion is preferably formed exclusively by glass fibers.

10. The use as claimed in claim 14, **characterized in that** further reinforcers are present in a proportion of 0-30% by weight in addition to the glass fibers.

11. The use as claimed in any of the preceding claims, **characterized in that** component (B) additionally comprises fillers, optionally in surface-treated form, selected from the following group: talc, mica, silicate, quartz, titanium dioxide, wollastonite, kaolin, amorphous silicas, magnesium carbonate, magnesium hydroxide, chalk, lime, feldspar, barium sulfate, solid or hollow glass beads or ground glass, especially ground flat glass fibers, permanently magnetic or magnetizable metal compounds and/or alloys, and mixtures of the elements from this group.

12. The use as claimed in any of the preceding claims, **characterized in that** component (A1) is a PA12 with a solution viscosity in the range of ηᵣₑₗ = 1.5 to 3.0, preferably in the range of ηᵣₑₗ = 1.6 to 2.6, especially in the range from 1.6 to 2.0, each in a measured 0,5% by weight m-cresol solution at a temperature of 20°C.

13. The use as claimed in any of the preceding claims, **characterized in that** component (A1) is a PA12, and up to a 50% by weight proportion of glass fibers has a solution viscosity of ηᵣₑₗ = 1.8 to 2.0, and for more highly reinforced molding materials has a solution viscosity of ηᵣₑₗ = 1.6 to 1.8, each in a measured 0,5% by weight m-cresol solution at a temperature of 20°C.

14. The use as claimed in any of the preceding claims, **characterized in that** the polyamides used in component (A1) either have a balanced end group ratio or the carboxyl end groups are present in excess, wherein the concentration of the amino end groups is preferably in the range from 5 to 70 mmol/kg, more preferably in the range from 5 to 50 mmol/kg and especially in the range from 5 to 30 mmol/kg, and/or wherein the concentration of the carboxyl end groups is preferably in the range from 50 to 150 mmol/kg, more preferably in the range from 60 to 120 mmol/kg and most preferably in the range from 60 to 90 mmol/kg.

15. The use as claimed in any of the preceding claims, **characterized in that** the polyamide molding material contains at most 0.5% by weight of further additives, preferably stabilizing additives.

16. The use as claimed in any of the preceding claims, **characterized in that** component (A) is present in the range from 30 to 90% by weight, **in that** component (A1) is present in the range of 65-85% by weight, especially preferably in the form of PA12, **in that** component (A2) is present in the range of 15-35% by weight, especially preferably in the form of MACM12-18 or MACMI/12 or MACMI/MACMT/12, and **in that** the component (B) present is 10-70% by weight of fillers and reinforcers, especially preferably in the form of glass fibers, optionally in combination with 0-10% by weight of further assistants.

17. The use as claimed in any of the preceding claims, **characterized in that** the ratio of component (A1) to component (A2) in the polyamide molding material is in the range of 2.5-4.

18. The use as claimed in any of the preceding claims, **characterized in that** the light transmission, determined at a wavelength of 600 nm, of a slab of thickness 2 mm produced from component (A2) is at least 88%, preferably at least 90%.

19. The use as claimed in any of the preceding claims, **characterized in that** component (A2) is microcrystalline and/or amorphous.

20. A molding for delivery and/or storage of drinking water, at elevated temperatures in the region above 60°C in the form of an armature, housing, valve, or a valve component selected from the group of valve housing, valve shutoff ball, valve vane, valve cylinder;
a mixer;
a water meter or a water meter component selected from the group of bearing, propeller, pedestal;
a pump or a pump component selected from the group of paddle wheel, impeller; or
a cartridge, conduit or vessel, or constituent or element thereof, produced using a molding material as defined in any of claims 1-21.

## Revendications

1. Utilisation d'une masse de formage avec les composants suivants :
(A) de 30 à 100 parts en poids d'un mélange de polyamide, contenant
(A1) de 50 à 95 parts en poids de PA12;
(A2) de 5 à 50 % en poids d'un homopolyamide ou d'un copolyamide transparent ou d'un mélange de polyamides de ce type choisi dans le groupe comprenant le MXDI, le MXDI/6I, le MXD6/MXDI, le MACM12, le MACM14, le MACM16, le MACM18, le PACM12, le PACM14, le PACM16, le PACM18 et/ou un copolyamide choisi dans le groupe comprenant le MACM12/PACM12, le MACM14/PACM14, le MACM16/PACM16, le MACM18/PACM18, le MACM9 à 18, le PACM9 à 18, le MACMI/12, le 6I/6T/MACMI/MACMT/12, le 3 à 6T, le 6I/6T, le TMDT, le 6I/MACMI/MACMT, le 6I/PACMI/PACMT, Le MACMI/MACMT/12, le 6I/6T/MACMI, le MACMI/MACM36, le 6I, le 12/PACMI, le 12/MACMT, le 6I/PACMT, le 6/6I, le 6/IPDT ou un mélange de tels polyamides;
le rapport du composant (A1) au composant (A2) dans la masse de formage en polyamide étant de l'ordre de 2 à 5;
B) de 0 à 70 parts en poids de matières de charge ou de renfort, ainsi que le cas échéants d'agents auxiliaires et d'additifs,
pour la fabrication d'un corps moulé pour l'eau potable, notamment d'un récipient ou d'un conduit pour lequel, dans le cas d'une utilisation conforme, au moins des zones de la masse de formage mise en oeuvre sont exposées de manière sensiblement directe à l'eau potable, s'agissant d'un corps moulé pour le stockage ou le transport d'eau potable à température élevée supérieure à 60°C, lors de la septième extraction, la concentration totale de carbone organique dissous ne dépassant pas une valeur de 12.5 mg C/m²d.

2. Utilisation selon la revendication 1, **caractérisée en ce que** le composant (A1) comporte au moins un polyamide avec un rapport méthylène/amide de 5 à 12, de préférence de 7 à 12.

3. Utilisation selon l'une quelconque des revendications précédentes, **caractérisée en ce que** le polyamide transparent du composant (A2) se présente notamment sous la forme d'un homopolyamide et/ou copolyamide amorphe ou microcristallin, présente une viscosité en solution (ηᵣₑₗ) comprise entre 1.3 et 2.0, notamment, de préférence entre 1.40 et 1.85 et/ou un point de transition vitreuse Tg supérieur à 90°C, de préférence supérieur à 110°C, de manière particulièrement préférée supérieur à 130°C.

4. Utilisation selon l'une quelconque des revendications précédentes, **caractérisée en ce que** le polyamide transparent est un polyamide et/ou un copolyamide microcristallin avec une enthalpie de fusion de l'ordre de 4 à 40 J/g, notamment de l'ordre de 4 à 25 J/g.

5. Utilisation selon l'une quelconque des revendications précédentes, **caractérisée en ce que** le polyamide transparent du composant (A2) est du MACM12 à 18, de préférence du MACM12, du MACM14 et/ou du MACM18 et/ou du MACMI/12 et/ou du PACM12/MACM12 et/ou du MACMI/MACMT/12 et/ou du 6I/6T.

6. Utilisation selon l'une quelconque des revendications précédentes, **caractérisée en ce qu'**il s'agit d'un corps moulé pour le stockage ou le transport d'eau potable à des températures supérieures à 80°C, de préférence, à des températures supérieures à 85°C ± 2°C alors qu'à cet effet, de manière particulièrement préférée, lors de la septième extraction, la concentration totale en carbone organique dissolu ne dépasse pas un valeur de 12.5 mg C/m²d.

7. Utilisation selon l'une quelconque des revendications précédentes, **caractérisée en ce que** le composant (A) est au moins en partie réticulé, de préférence avec ou sans ajout d'un additif réticulant, notamment sous réticulation induite par rayonnement, l'additif réticulant étant de préférence du TAIC, notamment dans une part de l'ordre de 1 à 5%.

8. Utilisation selon l'une quelconque des revendications précédentes, **caractérisée en ce que** le composant (B) est constitué en majeure partie, de préférence sensiblement en totalité de matières de renfort, choisies de préférence dans le groupe comprenant : les fibres de verre, les fibres de carbones, les fibres de bore, les fibres d'aramide, les fibres de basalte.

9. Utilisation selon l'une quelconque des revendications précédentes, **caractérisée en ce que** le composant (B) correspond à une proportion de l'ordre de 10 à 65 pour cent en poids, notamment de 15 à 60 pour cent en poids, de préférence d'au moins 20 pour cent en poids de la masse de formage en polyamide, cette part étant constituée de préférence exclusivement de fibres de verre.

10. Utilisation selon la revendication 14, **caractérisée en ce que** hormis les fibres de verres, d'autres matières de renfort sont contenues dans une part de 0 à 30 pour cent en poids.

11. Utilisation selon l'une quelconque des revendications précédentes, **caractérisée en ce que** le composant (B) contient en outre des matières de charges, le cas échéant sous une forme avec traitement de surface, choisies dans le groupe comprenant : le talc, le mica, le silicate, la quartz, l'oxyde de titane, la wollastonite, le kaolin, les acides siliciques amorphes, le carbonate de magnésium, l'hydroxyde de magnésium, la craie, la chaux, le feldspath, le sulfate de baryum, les billes de verre pleines ou creuses ou du verre moulu, notamment des fibres de verres plates moulues, des composés métalliques et/ou alliages magnétiques ou magnétisables, ainsi que des mélanges d'éléments dudit groupe.

12. Utilisation selon l'une quelconque des revendications précédentes, **caractérisée en ce que** le composant (A1) est un PA12 avec une viscosité en solution de l'ordre de ηᵣₑₗ = de 1.5 à 3.0, de préférence de l'ordre de ηᵣₑₗ = de 1.6 à 2.6, notamment de l'ordre de 1.6 à 2.0, chaque fois mesurée dans une solution de m-crésol à 0,5 parts en poids à une température de 20 °C.

13. Utilisation selon l'une quelconque des revendications précédentes, **caractérisée en ce que** le composant (A1) est un PA12 et se présente avec une part en poids de jusqu'à 50 % de fibres de verre, avec une viscosité en solution de ηᵣₑₗ = de 1.8 à 2.0, pour des masses de formage plus fortement renforcées, avec une viscosité en solution ηᵣₑₗ = de 1.6 à 1.8, chaque fois mesurée dans une solution de m-crésol à 0,5 parts en poids à une température de 20 °C.

14. Utilisation selon l'une quelconque des revendications précédentes, **caractérisée en ce que** les polyamides mis en oeuvre dans le composant (A1) présentent soit un rapport de groupe terminal équilibré ou que les groupes terminaux carboxy sont présents en excédent, la concentration en groupes terminaux amino étant de préférence de l'ordre de 5 à 70 mmoles/kg, de manière plus préférée de l'ordre de 5 à 50 mmoles/kg et notamment de l'ordre de 5 à 30 mmoles/kg et/ou la concentration en groupes terminaux carboxy étant de préférence de l'ordre de 50 à 150 mmoles/kg, de manière préférée de l'ordre de 60 à 120 mmoles/kg et de manière particulièrement préférée, de l'ordre de 60 à 90 mmoles/kg.

15. Utilisation selon l'une quelconque des revendications précédentes, **caractérisée en ce que** la masse de formage en polyamide contient au maximum 0,5 pour cent en poids d'additifs supplémentaires, de préférence d'additifs stabilisants.

16. Utilisation selon l'une quelconque des revendications précédentes, **caractérisée en ce que** le composant (A) est présent dans l'ordre de 30 à 90 % en poids, **en ce que** le composant (A1) est présent dans l'ordre de 65 à 85 parts en poids, notamment de préférence sous la forme d'un PA12, **en ce que** le composant (A2) est présent dans l'ordre de 15 à 35 parts en poids, notamment de préférence sous la forme de MACM12 à 18 ou de MACMI/12 ou de MACMI/MACMT/12 et **en ce que** le composant (B) se présente sous la forme de 10 à 70 parts en poids de matières de charge ou de renfort, le cas échéant en association avec de 0 à 10 pour cent en poids d'agents auxiliaires supplémentaires.

17. Utilisation selon l'une quelconque des revendications précédentes, **caractérisée en ce que** le rapport du composant (A1) au composant (A2) dans la masse de formage en polyamide est de l'ordre de 2.5 à 4.

18. Utilisation selon l'une quelconque des revendications précédentes, **caractérisée en ce que** la transmission lumineuse définie à une longueur d'ondes de 600 nm d'un panneau d'une épaisseur de 2 mm fabriqué dans le composant (A2) est d'au moins 88%, de préférence d'au moins 90%.

19. Utilisation selon l'une quelconque des revendications précédentes, **caractérisée en ce que** le composant (A2) est microcristallin et/ou amorphe.

20. Corps moulé pour le transport et/ou la conservation d'eau potable, à des températures élevées de l'ordre supérieur à 60°C, sous la forme
d'une robinetterie ou d'un boîtier,
d'une soupape ou d'un composant de soupape, choisis dans le groupe comprenant les corps de soupapes, les billes de verrouillage de soupape, les tiroirs de soupapes, les cylindres de soupapes ;
d'un mélangeur ;
d'un compteur d'eau ou d'un composant de compteur d'eau choisi dans le groupe des paliers, des hélices, des pylônes ;
d'une pompe ou d'un composant de pompe, choisi dans le groupe comprenant les roues à aubes, les ailes ; ou
d'une cartouche ou d'un élément de cette dernière, fabriqué sous utilisation d'une masse de formage, telle que définie dans l'une quelconque des revendications 1 à 21.
